(19) Europäisches Patentamt
European Patent Office
Office européen des brevets

(11) EP 2 429 104 A1

(12) **EUROPEAN PATENT APPLICATION**

(43) Date of publication:
**14.03.2012 Bulletin 2012/11**

(51) Int Cl.:
***H04J 3/06*** *(2006.01)*

(21) Application number: **10175780.5**

(22) Date of filing: **08.09.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicants:
- **Freie Universität Berlin**
  **14195 Berlin (DE)**
- **Highstreet Technologies GmbH**
  **12159 Berlin (DE)**

(72) Inventors:
- **Wolter, Katinka**
  **14169 Berlin (DE)**
- **Reinecke, Philipp**
  **13059 Berlin (DE)**
- **Pins, Sonja**
  **10963 Berlin (DE)**
- **Mittermaier, Alfons**
  **12159 Berlin (DE)**

(74) Representative: **Müller, Wolfram Hubertus et al**
**Patentanwälte**
**Maikowski & Ninnemann**
**Postfach 15 09 20**
**10671 Berlin (DE)**

# (54) A method for synchronizing frequency between a master clock and a slave clock

(57) The inventions provides for a method for synchronizing frequency between a master clock (50) and a slave clock (60), wherein the master clock (50) and the slave clock (50) are connected through a tree-shaped packet-switched network, in which the master clock (50) is connected to a root node (25) of the network and the slave clock (60) is connected to a leaf node (40) of the network, synchronization packets (70) are sent from the master clock (50) to the slave clock (60), and background traffic packets (75) are routed from the root node (25) of the network to the leaf nodes (40) of the network. According to the invention, the synchronization packets (70) sent out by the master clock (50) have a packet size at least about equal to the average packet size of the background traffic packets (75). This way, packet delay variations that are based on remainder-of-packet delays are reduced. In one embodiment, the synchronization packets (70) are modified standard synchronization messages which were modified by adding padding information enlarging the standard synchronization messages. The invention further regards a network suitable to carry out such method and a master clock for use in such method and network.

FIG 2

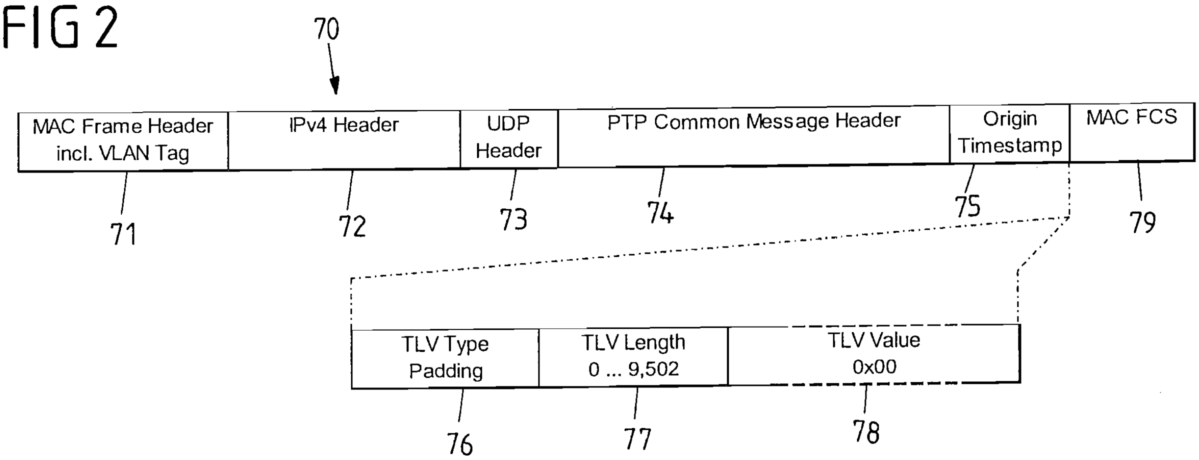


EP 2 429 104 A1

Printed by Jouve, 75001 PARIS (FR)

## Description

The invention regards a method for synchronizing frequency between a master clock and a slave clock. The invention further regards a network suitable to carry out such method and a master clock for use in such method and network.

More particularly, the invention relates to the frequency synchronization of base transceiver stations (BTS) of a mobile network or any other equipment requiring accurate timing. It addresses network scenarios in which a synchronization via satellite is not possible for economic, technical, or political reasons, and where other clock sources are not available. The invention significantly improves the applicability and the performance of timing-over-packet (ToP) techniques like the precision time protocol (PTP) according to the IEEE Standard 1588-2008. In contrast to other solutions, it does not incur prohibitive hardware cost neither on the transport equipment nor on the BTS or other timing sinks.

## Background

In computer and telecommunication networks a high frequency accuracy is required. In mobile networks, for instance, a frequency accuracy of 10 ppb is required. A desired frequency accuracy can be derived from the data signal in TDM-based transport technologies such as PDH and SDH. In such circuit-switched networks the frequency is thus transferred from a master clock to the slave clocks implicitly via the highly accurate bit clock of the signal.

In packet-switched networks such as Ethernet, despite the standardization of synchronous Ethernet, the great majority of packet switched equipment and networks is still inherently asynchronous such that the bit clock of the signal cannot be used for synchronization. At the same time, the wide spread launch of high speed packet access (HSPA) is driving operators in particular of mobile networks to evolve their backhaul network towards packet transport. Such packet transport backhaul networks are typically tree-shaped, with a radio controller being connected to the root node and base transceiver stations (BTS) being connected to the leaf nodes.

A known technique for providing synchronization in packet switched networks is timing-over-packet (ToP). The precision time protocol (PTP) according to the IEEE Standard 1588-2008 uses such ToP technique. In ToP techniques, time distribution between a master clock and a slave clock is provided for by synchronization packets which are sent out from the master clock to slave clocks at equidistant points in time. Using such protocol, generally, a high quality oscillator needs to be implemented in the master clock only, while the slave clocks may be implemented using less cost intensive oscillators.

However, ToP techniques such as PTP are vulnerable to low-frequency packet delay variation (PDV), unless compensated by PTP transparent clocks in the intermediate network elements. State-of-the-art transport equipment, however, does not contain PTP transparent clocks. The primary causes of PDV are the variation of the background traffic load and the distribution of the background packet size. Although packet prioritization and strict priority queuing (SPQ) reduce PDV, there is still the so-called remainder-of-packet delay: when the transmission of a low priority packet has already commenced even a packet of higher priority has to wait until the remainder of the low priority packet is completely transmitted. In many practical cases the remainder-of-packet delay accounts for the bulk of PDV. Consequently, either the PTP slave clock runs out of synchronization or it has to average out the PTD over a very long period. The former case is inacceptable from the network quality perspective and the latter case requires a high-quality oscillator in the PTP slave clock incurring prohibitive cost in many cases.

There is, accordingly, a need in the art to provide for frequency synchronization between a master clock and a slave clock in tree-shaped packet-switched networks such as mobile backhaul networks that reduces packet delay variations that are based on remainder-of-packet delays.

## Summary of the Invention

The present invention provides for a method with the features of claim 1, a tree-shaped packet-switched network with the features of claim 8 and a master clock with the features of claim 13. Embodiments of the invention are identified in the dependent claims.

Accordingly, in a first aspect, the invention provides for a method for synchronizing frequency between a master clock and a slave clock in which synchronization packets that are sent out by the master clock have a packet size at least about equal to the average packet size of the background traffic packets. In one embodiment, the synchronization packets have a packet size that is at least equal to the maximum size of the background traffic packets.

The invention is based on the idea to enlarge the size of standard synchronization packets that are used in timing-over packet techniques such as the PTP to synchronize frequency between a master clock and a slave clock. By enlarging the size of the synchronization packets, remainder-of-packet delay is considerably reduced for the following reasons: with the invention, the maximum packet delay variation based on remainder-of-packet delay is defined by the delay that a synchronization packet experiences at the first node to which the master clock is connected. In subsequent nodes, a further increase in remainder-of-packet delay cannot occur as the synchronization packet has a size at least about equal to the average packet size of the background traffic or even equal to the maximum size of the background traffic packets. Therefore, in subsequent nodes, the synchronization packet is never "catching up" background traffic packets which would force it to wait for such background packets to be transmitted at the node.

In this respect, it is important to note that the present invention - other than IEEE Standard 1588-2008 - does take advantage of the fact that most access networks are tree-structured with virtually all traffic being sent from the site of a master clock to the sites of the slave clocks. Because of the tree-shape of the network it is not possible that at nodes subsequent to the node to which the master clock is connected additional background traffic is received by the nodes (in the direction to the leaf nodes). Accordingly, if a packet is in front of another packet at the root node, it is also in front of the other packet at each further node on the way to a leaf node. The synchronization packet only experiences a remainder-of-packet delay at the root node in case a background traffic packet is in the process of being transmitted by the node when the synchronization packet arrives. At subsequent nodes, there is no further delay as the transmission of the synchronization packet at the subsequent nodes is not faster than the transmission of the background traffic packets.

Standard synchronization packets used in timing-over-packet techniques are relatively short compared to the average or maximum length of background traffic packets. For example, in the PTP, synchronization packets (that are called synchronization messages in the PTP) have a length of 94 octets. The background traffic packets usually have a maximum length of 1.522 octets (which is the maximum length in Ethernet). The invention is based on the idea to magnify or enlarge the length of the standard synchronization packets, preferably to an extent that the length or packet size of the synchronization packet is at least about equal to the maximum length or packet size of the background traffic, i.e., in the example mentioned, to 1.522 octets.

The exact degree of magnification depends on the packet delay variation that the timing-over-packet implementation can accept, the background traffic load, the background traffic packet size distribution, the number of links between the master clock and the slave clock, and the data rates of the links.

It is pointed out that the invention increases the absolute delay of the synchronization packets. Such absolute delay, however, is irrelevant. What is relevant is that the delay variations based on remainder-of-packet delays are reduced.

A tree-shaped network that the invention considers between a root node to which the master clock is connected and the leaf nodes to which the slave clocks are connected can be part of a larger network or be connected to other networks. However, any network or network part between a node to which a master clock is connected and leaf nodes to which slave clocks are connected that - between these nodes - is tree-shaped is a tree-shaped network according to the invention. Any tree-form may be implemented in this respect. Also, it is pointed out that traffic in the other direction starting from the leaf nodes does not necessarily have to follow such tree-formed network.

As mentioned before, in an embodiment, the synchronization packets have a packet size at least equal or about equal to the maximum size of the background traffic packets. This way, it is ensured that there is no background traffic with larger packet size than the packet size of the synchronization packets. The closer the packet size of the synchronization packets to the maximum size of the background traffic packets, the better is the reduction in remainder-of-packet delays.

At the same, there may be scenarios in which the synchronization packets are given a packet size even larger than the maximum size of the background traffic packets. This is the case in networks in which a reduction in bandwidth occurs on the data links between the root nodes and the leaf nodes of the network. For example, if the first links have a bandwidth of 100 Mbit/s and the last link or links before a leaf node a bandwidth of 50 Mbit/s, the bandwidth is reduced by the factor 2. In such case, preferably, the synchronization packets are given a packet size equal to the maximum size of the background traffic packets times the factor 2 that reflects the reduction in bandwidth that occurs on the data links between the root nodes and the leaf nodes. Accordingly, in the example mentioned, if the maximum size of the background traffic packets is 1522 octets, the synchronization packets would be given a size of 3044 octets. This way, also remainder-of-packet delays are considered that would be related to a reduction in bandwidth and additional transmission time that the reduction in bandwidth causes. Accordingly, in an embodiment of the invention, the modified synchronization packets have a size of about 1522 octets (the maximum length in Ethernet) or of 1522 octets times a factor that reflects the reduction in bandwidth that occurs on the data links between the root node and the leaf nodes of the network.

In a further embodiment, the network nodes comprise switches implementing priority queuing, wherein synchronization packets are given the highest priority in priority queues of switches and background traffic packets are given a lower priority in priority queues of switches. This ensures that there is as little delay as possible when transmitting the synchronization packets at a network node.

The synchronization packets of the present invention and the background traffic packets can be layer-2 frames or layer-3 packets. In particular, layer-2 frames are also considered "packets" within the meaning of the present invention. In PTP, synchronization messages may either be directly inserted in Ethernet frames or they may be encapsulated, via UDP, in IP datagrams and then optionally transported in Ethernet frames. The switches in the network nodes may be layer-2 switches such as Carrier Ethernet switches. However, similarly, the invention may be implemented in layer 3 of the OSI reference model, with the synchronization packets and the background traffic packets being layer-3 packets such as IP packets. In such case, layer-3 switches may be used at the network nodes.

In an embodiment of the present invention, the synchronization packets are modified standard synchronization messages, the modification regarding the adding of padding information to the standard synchronization messages, thereby enlarging the standard synchronization messages. The standard that defines the standard synchronization messages may be any standard implementing timing-over-packet (ToP) techniques. In one embodiment, the synchronization packets are modified synchronization messages based on synchronization messages according to the Precision-Time-Protocol of IEEE Standard 1588-2008. Accordingly, standard, but enlarged synchronization messages are used as synchronization packets. This implementation has the advantage that synchronization packets according to the invention can be easily generated in master clocks using the PTP or other ToP standards and easily recognized in slave clocks using PTP or such other ToP standards, without inducing additional hardware costs and with little programming required.

It is pointed out that the master clock does not necessarily have to send out the synchronization packets in a timely equidistant manner. As each synchronization packet contains a time stamp, a slave clock is easily able to correct a possible time variation in the dispatch of the synchronization packets. There is even an advantage associated with a variation in the dispatch of the synchronization packets about a nominal point in time, as this way undesired special effects such as the clash of two different synchronization packet streams cannot occur.

In a second aspect, the invention provides for a tree-shaped packet-switched network comprising:

- a root node and a plurality of leaf nodes interconnected by intermediate nodes,
- a master clock connected to the root node of the network,
- at least one slave clock connected to a leaf node of the network,
- wherein the master clock is configured to send synchronization packets to the slave clock,
- wherein the network is configured to route background traffic packets from the root node to the leaf nodes of the network, and
- wherein the master clock is configured to provide for and send out synchronization packets which have a packet size at least about equal to the average packet size of the background traffic packets.

Data links between network nodes are, for example, at least partly implemented as microwave radio links. The network is, e.g., a mobile backhaul network.

In a third aspect, the invention provides for a master clock for use in the method of claim 1 or the network of claim 8 that is configured to provide for and send out synchronization packets which have a packet size at least about equal to the average packet size of background traffic packets routed over a network to which the master clock is connected.

In another aspect, the invention provides for a method and network for synchronizing frequency between a master clock and a slave clock, wherein

- the master clock and the slave clock are connected through a tree-shaped packet-switched network, in which the master clock is connected to a root node of the network and the slave clock is connected to a leaf node of the network,
- synchronization packets are sent from the master clock to the slave clock,
- background traffic packets are routed from the root node of the network to the leaf nodes of the network, and wherein
- the synchronization packets sent out by the master clock are modified standard synchronization messages, the modification regarding the adding of padding information to the standard synchronization messages, thereby enlarging the standard synchronization messages.

The standard that defines the standard synchronization messages may be any standard implementing timing-over-packet techniques. In an embodiment, padding is added to the standard synchronization messages to an extent that the synchronization packets have a packet size at least about equal to the average packet size of the background traffic packets or at least about equal to the maximum packet size of the background traffic packets.

## Brief Description of the Drawings

To further discuss various aspects of the present invention, a more particular description of the invention will be rendered by reference to specific embodiments thereof which are illustrated in the appended drawings. It is appreciated that these drawings depict only typical embodiments of the invention and are therefore not to be considered limiting of its scope. The invention will be described and explained with additional specifity and details through the use of the accompanying drawings in which:

Fig. 1 shows one branch of the tree-structured network with all traffic flowing from a root source to the branches, wherein in Figure 1 also shows background traffic flows (flow 0 ... flow N) and foreground traffic flow;

Fig. 2 shows a PTP synchronization package modified in accordance with the present invention;

Fig. 3 is an example of the tree-structured network that form a microwave radio-based mobile backhaul;

Fig. 4 shows in more detail the structure used in a switch and a microwave radio link of the network of Figures 1 and 3;

Fig. 5 is a diagram showing the impact of background traffic on remainder-of-packet delay variation over 5 links at 100 Mbit/s using state of the art synchronization packets;

Fig. 6 is a diagram showing the impact of the numbers of links at equal bandwidth on remainder-of-packet delay variation on the basis of state of the art synchronization packets;

Fig. 7 is a diagram showing the impact of timing packet size on remainder-of-packet delay variation using synchronization packets in accordance with the invention;

Fig. 8 shows the impact of timing packet size on remainder-of-packet delay variation using synchronization packets in accordance with the invention;

Fig. 9A is a first example of the transmission of a background traffic packet and a standard synchronization packet at a carrier Ethernet switch; and

Fig. 9B is a second example of the transmission of a background traffic packet and a standard synchronization packet at a carrier Ethernet switch; and

Fig. 9C is a third example of the transmission of a background traffic packet and a standard synchronization packet at a carrier Ethernet switch.

**Detailed Description of Embodiments of the Invention**

To better understand the background of the present invention, it is first described a method implementing timing-over-packet techniques in accordance with the state of the art.

Figure 3 shows as one embodiment of a tree-structured packet-switched network a mobile backhaul network which is built of microwaves radio (MWR) links 10 and carrier Ethernet (CE) switches 20, 25. Background traffic, which consists of the actual user traffic, signalling traffic, and operations, administration and maintenance (OAM) traffic, flows from a radio controller 30 to a plurality of base transceiver stations (BTS) 40. A master clock 50 is connected to a root node 25, namely, a CE switch 25 which implements the root node. Further, slave clocks 60 are integrated into the base transceiver stations 40. Synchronization messages in accordance with the PTP or any other timing-over-packet technique are sent from the master clock 50 over the CE switches 20, 25 to the slave clocks 60 in the BTSs 40.

It is pointed out that in Figure 3 the master clock 50, although co-located with the radio controller 30, is a separate part from the radio controller 30. In other embodiments, however, the master clock 50 may be part of or integrated into the radio controller 30.

The radio controller 30 is a governing element in the mobile backhaul network responsible for controlling the BTS nodes 40 that are connected to it through the tree-structured network. The function of the radio controller 30 will not be further discussed as such radio controllers are well known to the person skilled in the art.

When synchronization messages and other traffic is sent from the root node 25 to the leaf nodes, the switches 20 and the stations 15 of the microwave radio links 10 implement priority queuing. This is shown in Figure 4. The top of Figure 4 shows a switch 20, two MWR stations 15 and an MWR link 10 between the two stations 15. The bottom of Figure 4 shows additional details. In particular, both the switch 20 and the MWR stations 15 include priority queuing units 200, 150 which comprise priority schedulers and which include at least two queues 20-1 to 20-n, $n \geq 2$, for data packets with different priority. The switch 20 also includes a switching matrix 210. If a data packet is received on a queue with higher priority, it is transmitted by the switch before a data packet that is received on a queue with a lower priority. However, a data packet of high priority and assigned to highest priority queue still needs to wait before being transmitted if a data packet of a lower priority queue is already in the process of being transmitted by the switch. This causes a remainder-of-packet delay.

Switches implementing priority queuing are well known in the art and thus not further discussed.

In the following discussion, the BTSs 40 sometimes are also referred as leaf nodes, although strictly speaking they do not represent leaf nodes of the tree-structured packet-switched network but are connected to such leaf nodes. However, they are at the end of the respective branch.

When traffic is sent from the root node 25 to the leaf nodes 40, only the CE switches 20, and not the MWR links 10 distribute the traffic in more than one direction. The path of a PTP synchronization message from the PTP master clock 50 to the PTP slave clock 60 can, therefore, be modelled as a chain of switching matrixes, priority queueing units with strict priority schedulers, and transmission lines.

Figure 1 illustrates such a generic model of a tree-structured network with all traffic flowing from a root source 25 to the branches. Because only the path of the single PTP master clock to a PTP slave clock connection is examined at a time, only one branch is actually depicted in Figure 1.

Figure 1, in addition to a branch of a tree-structured network, shows the background traffic flow 600 between the root node 25 and the leaf nodes 40 which is the sum of flow 0 to flow N. Each switch 20 distributes the traffic in more than one direction. Accordingly, flow N only remains at the last link $R_{link\ N}$ to the BTS 40. Figure 1 further shows the high priority foreground traffic flow 700 to the BTS 40 which includes the synchronization packages which are called Sync messages in PTP.

According to IEEE Standard 1588-2008, the PTP master clock 50 sends comparatively small PTP Sync messages to the PTP slave clock 60. Encapsulated in a VLAN-tagged Ethernet frame via UDP / IP, the PTP Sync messages are 94 octets long. In contrast, the bulk of the background traffic, which causes the remainder-of-packet delay, consists of 1522 octet packets.

Referring to Figure 1, when a PTP Sync message comes in on link 0, it is inserted in the queue of highest priority. Packets from the radio controller are inserted in queues of lower priority. In the first node 25, the arrival times of the foreground PTP Sync messages and the background packets are statistically independent. Because of the strict priority queuing algorithm of the scheduler 200 (actually depicted by the trapezium downstream of the priority queues), a high priority PTP Sync message only has to wait if the transmission of a low priority background packet has already begun. The probability $P_{remainder}$ that a PTP Sync message experiences this remainder-of-packet delay is

$$P_{remainder} = \left(\sum_{n=1}^{N} R_{flow\ n}\right) / R_{link\ 1}$$

with $R_{flow\ n}$ being the data rate of the $n^{th}$ background traffic flow and $R_{link\ 1}$ being the data rate of the first link. If the PTP Sync message has to wait the remainder-of-packet delay $t_{remainder}$ is uniformly distributed over the transmission time of the background packet.

$$0 \leq t_{remainder\ 1} \leq s_{background\ packet} / R_{link\ 1}$$

with Sbackground packet being size of the background packet and $R_{link\ 1}$ being the data rate of the first link.

Since the background and the foreground traffic flows are aligned on the first link the arrival times of background and foreground packets are no longer statistically independent on the succeeding links. The packets arrive one after the other. When a 94 octet PTP Sync message has to wait in the first node 25 until an, e.g., 1522 octet background packet is completely transmitted over the first link it will definitely have to wait in the second node again unless the data rate $R_{link\ 2}$ of the second link is much higher than the one of the first link. The reason is that virtually all packet switching equipment operates in the store-and-forward mode, i.e., a packet has to be completely come in on the ingress interface before its transmission on the egress interface may start. And since the PTP Sync message is comparatively small with a correspondingly low transmission delay it typically catches up the larger background packet in the next node. The remainder-of-packet delay $t_{remainder\ 2}$ that the PTP Sync message experiences in such a case on the second link is

$$t_{remainder\ 2} = (s_{background\ packet} / R_{link\ 2}) - (s_{PTP\ Sync} / R_{link\ 1})$$

with SPTP Sync being the size of the PTP Sync message.

This kind of remainder-of-packet delay further accumulates over all links down to the PTP slave clock 60 in the BTS 40.

For a better understanding, the issue of small PTP Sync messages catching up large background packets shall be explained with three example scenarios.

**Scenario 1:** A PTP Sync message of 94 octets arrives just before a 1,522 octet background packet in the first switch 25 with 100 Mbit/s interface.

In scenario 1, since the PTP Sync message arrives before the background packet it is scheduled first and its transmission immediately commences. After 94 * 8 bit / 100 Mbit/s = 7.52 μs the PTP Sync message is completely transmitted and the transmission of the background traffic starts. It takes another 1,522 * 8 bit / 100 Mbit/s = 121.76 μs before the background traffic has completely arrived in the second switch. At that point in time the PTP Sync message has already been completely sent over the second 100 Mbit/s link since this takes only 7.52 μs. The large background packet will never catch up the PTP Sync message.

**Scenario 2:** A PTP Sync message of 94 octets arrives while a 1,522 octet background packet is being transmitted over the first 100 Mbit/s interface.

In scenario 2, although the PTP Sync message is of higher priority than the background packet it has to wait until the transmission of the latter has completed (remainder-of-packet delay). Given the transmission of the background packet has just started the PTP Sync message has to wait 1,522 * 8 bit / 100 Mbit/s = 121.76 μs. Only then can the PTP Sync message be sent over the first 100 Mbit/s link, which takes 94 * 8 bit / 100 Mbit/s = 7.52 μs. When the PTP Sync message has been completely received by the second switch 20, only a small portion of the background packet has been transmitted over the second 100 Mbit/s link. Indeed, exactly 7.52 μs * 100 Mbit/s = 752 bit = 94 * 8 bit of the background packet has been transmitted. The PTP Sync message has to wait again. And so on on the succeeding links.

**Scenario 3:** A PTP Sync message of 94 octets arrives slightly after a 1,522 octet background packet has been sent over 100 Mbit/s interface.

In scenario 3, since the PTP Sync arrives, let us say, 100 μs after the transmission of a preceding 1,522 octet background packet it need not wait and can be transmitted within 7.52 μs over the first 100 Mbit/s link. At that point in time the background packet is not yet completely transmitted over the second 100 Mbit/s link. More precisely it will take 121.76 μs - 100 μs - 7.52 μs = 14.24 μs. Therefore the PTP Sync message has to wait 14.24 μs before its transmission over the second link can start. On a potential third link it would have to wait 121.76 μs - 7.52 μs = 114.24 μs. And so on on the succeeding links.

The three scenarios 1, 2, 3 described above are illustrated in Figures 9A, 9B, 9C. For simple illustration, only two priority queues 20-1 and 20-2 are implemented in the priority schedulers 200. Queue 20-1 is a high priority queue and queue 20-2 is a low priority queue. Synchronization messages sent from the master clock 50 are transmitted over the higher priority queue 20-1, while background traffic is routed on low priority queue 20-2.

In Figure 9A, which corresponds to scenario 1, a PTP synchronization message 70 arrives just before a background traffic packet 75. In particular, a part 70' of the synchronization message 70 has already been transmitted by the switch. In Figure 9B, which corresponds to scenario 2, a PTP synchronization message 70 arrives while a background traffic packet 75 is being transmitted. In particular, a part 75' of the background traffic packet 75 has already been transmitted, while another part of the background traffic packet 75 has not yet been transmitted. In Figure 9C, which corresponds to scenario 3, the synchronization message 70 arrives slightly after a background traffic package 75 has been sent out from the switch. A remainder-of-packet delay may occur at subsequent nodes/switches as the synchronization message 70 arrives at those switches while the background traffic packet 75 is still in the process of being transmitted at those switches.

Figures 5 and 6 display PDV quantiles obtained from simulations with different background traffic loads and background packet size distributions when using state of the art PTP synchronization messages. Since the performance of ToP implementations strongly deteriorates with increasing PDV, especially when even the fastest are affected, i.e. the low quantiles, packet-based clock recovery is not applicable over many mobile backhaul networks.

More particularly, Figure 5 shows the impact of background traffic on remainder-of-packet delay variation in a simulation that includes 5 links at a bandwidth of 100 Mbit/s. The packet delay variation (PDV) in μs is depicted dependent on the background traffic load. PDV quantiles with 94 octet PTP sync messages are used for the simulation. The top six graphs which show a PDV in the range between 400 and 500 μs at loads over 80% all regard background traffic with maximum packet size of 1530 octet packets (1522 octets of maximum-sized Ethernet frame without VLAN tag plus 12 octets of inter-packet gap). It is obvious that the delay increases with increasing background traffic load.

The same is true for the other six graphs which consider traffic according to ITU-T network traffic model 2, which considers data in mobile networks with a high degree of data traffic. In such model, both maximum packet sizes with 1530 octet packets and smaller packet sizes are mixed. Here also, the delay considerably increases with increased background traffic load.

It is pointed out that the graph explanations at the right hand side of the Figure 5 indicate a percentage such as "PDV 0.1%". This percentage means that the respective graph considers the 0.1% fastest packets. Similarly, the "PDV 10% "considers the 10% fastest packets.

Figure 6 shows another diagram indicating packet delay variations in accordance with the state of the art. In Figure 6, the impact of the number of links at equal bandwidth is indicated. Again, it is clear that the PDV (PDV 1% in this example) increases with the number of links. Figure 6 only regards maximum size 1522 octet packets as background traffic and 94 octet PTP sync messages.

In consideration of the above state of the art, the inventive concept will be explained next. The key idea of the invention is to prevent the PTP Sync messages from catching up the background packets at the intermediate nodes between the root node and the leaf nodes. In mathematical terms, $t_{remainder}$ 2 has to become zero. Using the equation for the calculation of $t_{remainder}$ 2 one obtains

$$t_{remainder\ 2} = (s_{background\ packet} / R_{link\ 2}) - (s_{PTP\ Sync} / R_{link\ 1}) = 0$$

$$s_{PTP\ Sync} / R_{link\ 1} = s_{background\ packet} / R_{link\ 2}$$

$$s_{PTP\ Sync} = s_{background\ packet} * R_{link\ 1} / R_{link\ 2}$$

This means that the PTP Sync messages have to be enlarged. The degree of depends on the PDV the ToP implementation can accept, the background traffic load and packet size distribution, and the number of links and their data rates.

To illustrate the above reasoning we formally analyze a special case, where we first assume all links have the same data rate $R_{link}$.

Let $u = S_{background\ packet} / R_{link}$ and $p = {}_{SPTPSync} / R_{link}$ then we can define the maximum packet transfer delay $PTD_{max}$ and the minimum packet transfer delay $PTD_{min}$ of a PTP Sync message across N links as

$$PTD_{max} = u + p + (N - 1) * \max(0, (u - p)) + (N - 1)*p = p + N * u$$

$$PTD_{min} = N * p$$

In the worst case, the timing packet has to wait for transmission of a full background packet at the first link, adding then its own transmission time. At all subsequent links the PTP Sync message needs to wait for the remaining transmission time of the (usually larger) background packet. Finally, the transmission time of the PTP Sync message across all links needs to be added. In the best case, the PTP Sync message never needs to wait for remaining transmission delay of a background packet.

We can distinguish two cases:

1) u >= p,
2) u < p.

Only the first case is of practical interest and therefore we can omit the maximum in the definition of $PTD_{max}$ in what follows. Peek-to-peak packet delay variation p2pPDV is defined as the difference between $PTD_{max}$ and $PTD_{min}$. Let us assume that u = i * p, where i >= 1 in order to respect case 1) and i can be any real-valued number. Then

$$p2pPDV = PTD_{max} - PTD_{min} = p\ (\ 1 + (i - 1) * N\ ).$$

The value of i that minimizes the delay variation and obeys all restrictions is i = 1. For the optimal value of i the timing packet has the same size as the (largest) background packet and the peak-to-peak packet delay variation then

reduces to

$$p2pPDV_{opt} = p.$$

For the second case (u < p) the delay variation is always p.

Instead of giving the timing packet the same size as the largest background packet, a less optimal solution is also viable. In particular, the timing packet may be given a size equal to the average packet size of the background traffic packets, or even to some extent below. In PTP, any size larger than 94 octects already leads to an improvement in remainder-of-packet delays and peak-to-peak packet delay variation. These possibilities are reflected by the language in the claims that the synchronization packets have a packet size "at least about equal to the average packet size of the background traffic packets".

Next, an implementation of the invention in the precision time protocol (PTP) according to IEEE Standard 1588-2008 is described. Implementations in other ToP protocols may be similar. Although intended for other purposes, the IEEE Standard 1588-2008 defines type-length-value (TLV) entities. A padding entity is defined hereby.

More particularly, Figure 2 shows a synchronization message in accordance with PTP, which, however, was modified to implement an embodiment of the present invention. More particularly, the synchronization message 70 includes standard fields 71, 72, 73, 74, 75 and 79. These fields are defined in the PTP standard. More particularly, the synchronization message 70 includes a field 71 which is a MAC Frame Header. The length is 18 octets. It further includes a field 72 which is an IPv4 Header. The length of field 72 is 20 octets. The message 70 further includes an UDP Header 73, the length of which is 8 octets. It further includes a PTP Common Message Header 74, the length of which is 34 octets. The next field regards the Origin Timestamp 75. The length of this field is 10 octets. The Origin Timestamp serves to synchronize time with the slave clocks. The last field 79 is a MAC FCS which has a length of 4 octets.

According to an embodiment of the invention, this synchronization message is enlarged by adding fields 76, 77, 78. These fields regard a padding that serves to enlarge the length of the synchronization message 70. In the context of the invention, padding or padding information may be any information added to a standard message that does not have any specific meaning in the context of the standard and that is added only for the reason that the standard message is enlarged.

In modified synchronization message 70, field 76 regards TLV type padding. The length is 2 octets. Field 77 regards the TLV length which is between 0 and 9.502 octets. The length of that field is 2 octets. Field 78 regards the actual padding and includes a TLV value which may have a size of 1522 - 94 - 4 octets, i.e. 1424 octets, such that the complete length of the PTP synchronization message is now 1522 octets, i.e., the maximum length of Ethernet frames. TLV value may be all zeros or ones.

Accordingly, in this implementation, the length of the Padding TLV is specified in such a way that, when added to a PTP synchronization message like the PTP Sync message, the resulting message is enlarged to the required size.

Since a generic TLV mechanism of the PTP according to IEEE 1588-2008 is used in this embodiment, the modification will not affect transmission of the synchronization message 70 in the network and the PTP slave clocks 60 will be able to handle the PTP synchronization messages magnified by such padding TLVs by simply ignoring the TLV.

Other implementations would have to be changed in this way. A PTP master clock 50, irrespective of whether it is a PTP grandmaster clock or just a master port in a PTP boundary clock, would have to implement a configuration option that allows specifying the size of the padding TLV. The advantage of the padding TLV is that it requires only minor modifications to a PTP clock, if any at all.

Larger PTP synchronization messages as the one described in Figure 2 have two disadvantages that need consideration when defining the size of the padding TLV. These disadvantages are that a) larger packets consume more bandwidth and b) that variations of the data link rate cause a proportionally higher transmission delay variation with larger packets. However, simulations as the ones discussed further below with respect to Figure 7 and 8 can be used for finding a trade-of between the reduction of remainder-of-packet delay variation, band width consumption, and transmission delay variation.

Figure 7 and Figure 8 demonstrate the impact of the PTP Sync message size in various scenarios. Figure 7 shows a diagram in which synchronization packets in accordance with the present invention are used. In particular, some synchronization packets have been implemented as shown in Figure 2. It is shown the impact of timing packet size on the PDV. The PDV 1% in μs is shown dependent on the background traffic load.

The three graphs which show a high PDV 1% in the range between 400 and 650 μs at loads over 80% all regard examples in which 94 octet timing packets were used for the synchronization messages. The other graphs correspond to synchronization packages with enlarged 1522 octet timing packets, 3044 octet timing packets or 6088 octet timing packets. It is clear that the increase in the size of the synchronization messages has a strong positive impact on the packet delay variation.

This result also follows from Figure 8, which shows the PDV 1% with different PTP synchronization message sizes and the ITU-T network traffic profile 2 background traffic. Another parameter besides the size of the synchronization messages is the bandwidth of the links. Four graphs regard five links at 100 Mbit/s. Four other graphs regard two links at 100 Mbit/s and three links at 50 Mbit/s. Four further graphs regard two links at 100 Mbit/S, two links at 50 Mbit/s and one link at 25 Mbit/s.

Again, the three graphs with the highest PDV are those which use 94 octet timing packets for the synchronization messages. The PDV considerably decreases with using 1522, 3044 or even 6088 octet timing packets. Synchronization messages with sizes larger than the maximum packet size in Ethernet, i.e., 1522 octets or bytes, are implemented in view of the fact that the bandwidth of the links decreases in some of the simulated scenarios from 100 Mbit/s to 50 Mbit/s or to 25 Mbit/s. Therefore, the length of the synchronization messages of 1522 octets is further increased with a corresponding factor 2 or 4.

The invention may be embodied in other specific forms without departing from essential characteristics. The described embodiments are to be considered in all respects only as illustrative and not restrictive. The scope of the invention is, therefore, indicated by the appended claims rather than by the foregoing description.

## Claims

1. A method for synchronizing frequency between a master clock (50) and a slave clock (60), wherein

    - the master clock (50) and the slave clock (50) are connected through a tree-shaped packet-switched network, in which the master clock (50) is connected to a root node (25) of the network and the slave clock (60) is connected to a leaf node (40) of the network,
    - synchronization packets (70) are sent from the master clock (50) to the slave clock (60), and
    - background traffic packets (75) are routed from the root node (25) of the network to the leaf nodes (40) of the network,

    **characterized in that**
    the synchronization packets (70) sent out by the master clock (50) have a packet size at least about equal to the average packet size of the background traffic packets (75).

2. The method of claim 1, **characterized in that** the synchronization packets (70) have a packet size at least equal to the maximum size of the background traffic packets (75).

3. The method of claim 1 or 2, **characterized in that** the synchronization packets (70) have a packet size equal to the maximum size of the background traffic packets (75) times a factor that reflects the maximum reduction in bandwidth that occurs on the data links (10) between the root node (25) and the leaf nodes (40) of the network.

4. The method of any of claims 1 to 3, **characterized in that** the synchronization packets (70) are given the highest priority in priority queues (20-n) of switches (20, 25) of the packet-switched network, while background traffic packets (75) are given a lower priority in priority queues (20-n) of switches (20, 25) of the packet-switched network.

5. The method of any of claims 1 to 4, **characterized in that** the synchronization packets (70) and the background traffic packets (75) are layer-2 frames or layer-3 packets.

6. The method of any of claims 1 to 5, **characterized in that** the synchronization packets (70) are modified standard synchronization messages, the modification regarding the adding of padding information to the standard synchronization messages, thereby enlarging the standard synchronization messages.

7. The method of any of claims 1 to 6, **characterized in that** the modified synchronization packets (70) have a size of about 1522 octets or of 1522 octets times a faktor that reflects the reduction in bandwidth that occurs on the data links (10) between the root node (25) and the leaf nodes (40) of the network.

8. A tree-shaped packet-switched network comprising:

    - a root node (25) and a plurality of leaf nodes (40) interconnected by intermediate nodes (20),
    - a master clock (50) connected to the root node (25) of the network,
    - at least one slave clock (60) connected to a leaf node (40) of the network,

- wherein the master clock (50) is configured to send synchronization packets (70) to the slave clock (60), and
- wherein the network is configured to route background traffic packets (75) from the root node (25) to the leaf nodes (60) of the network,

**characterized in that**
the master clock (50) is configured to provide for and send out synchronization packets (70) which have a packet size at least about equal to the average packet size of the background traffic packets (75).

**9.** The network of claim 8, **characterized in that** the synchronization packets (70) have a packet size at least equal to the maximum size of the background traffic packets (75).

**10.** The network of claim 8 or 9, **characterized in that** the network nodes comprise switches (20, 25) implementing priority queuing, wherein synchronization packets (70) are given the highest priority in priority queues (20-n) of the switches (20, 25) and background traffic packets (75) are given a lower priority in priority queues (20-n) of the switches (20, 25).

**11.** The network of any of claims 8 to 10, **characterized in that** data links (10) between network nodes (20, 25) are at least partly implemented as microwave radio links.

**12.** The network of any of claims 8 to 11, **characterized in that** the master clock (50) is configured to send out synchronization packets (70) that are modified standard synchronization messages, the modification regarding additional padding information (78) contained in the modified synchronization messages (70) enlarging the standard synchronization messages.

**13.** A master clock for use in the method of claim 1 or the network of claim 8, **characterized in that** the master clock (50) is configured to provide for and send out synchronization packets (70) which have a packet size at least about equal to the average packet size of background traffic packets (75) routed over a network to which the master clock (50) is connected.

**14.** The master clock of claim 13, **characterized in that** the synchronization packets (70) have a packet size at least equal to the maximum size of the background traffic packets (75).

**15.** The master clock of claim 13 or 14, **characterized in that** the synchronization packets (70) are modified standard synchronization messages, the modification regarding the adding of padding information to the standard synchronization messages, thereby enlarging the standard synchronization messages.

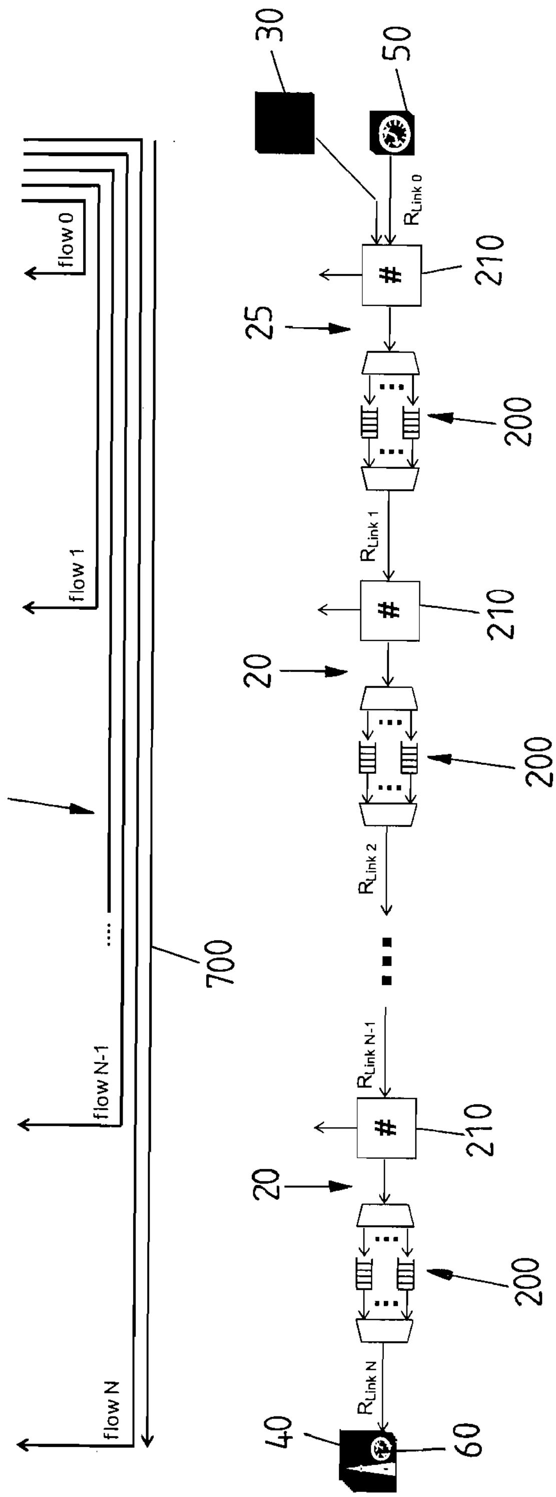
30
50
210
25
200
20
600
700
40
60
flow 0
flow 1
flow N-1
flow N
R Link 0
R Link 1
R Link 2
R Link N-1
R Link N

FIG 1

FIG 2

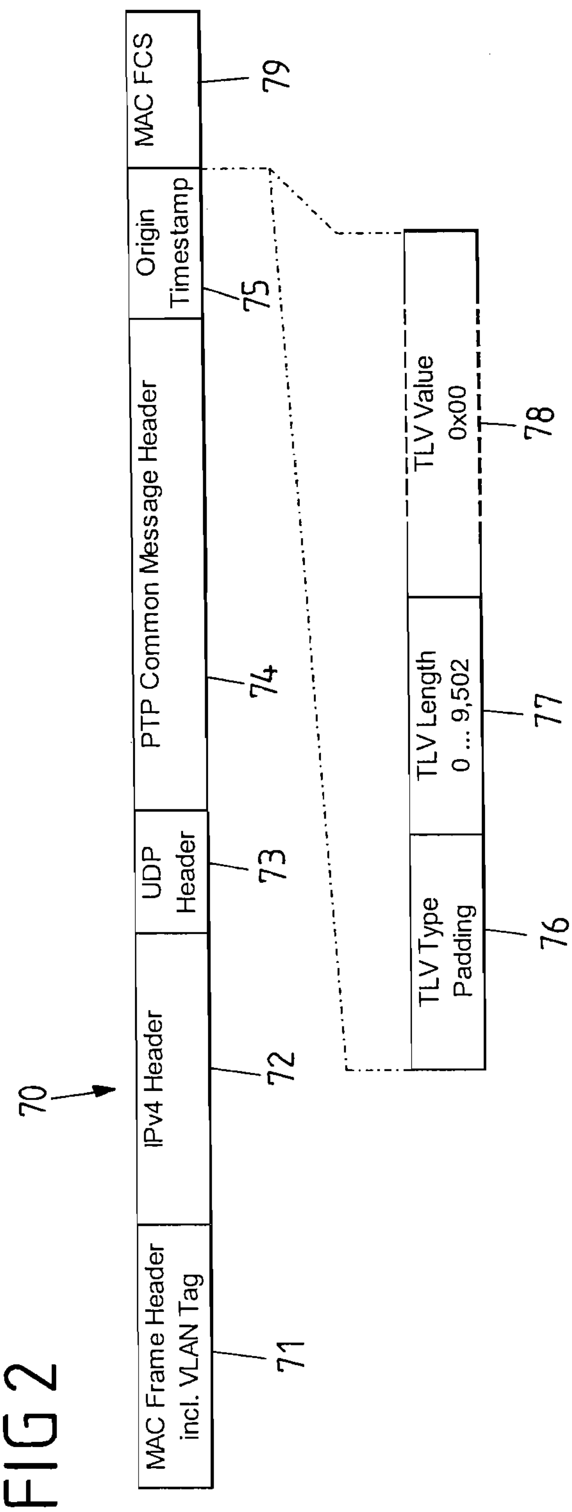
MAC Frame Header incl. VLAN Tag
IPv4 Header
UDP Header
PTP Common Message Header
Origin Timestamp
MAC FCS
TLV Type Padding
TLV Length 0 ... 9,502
TLV Value 0x00
70
71
72
73
74
75
76
77
78
79

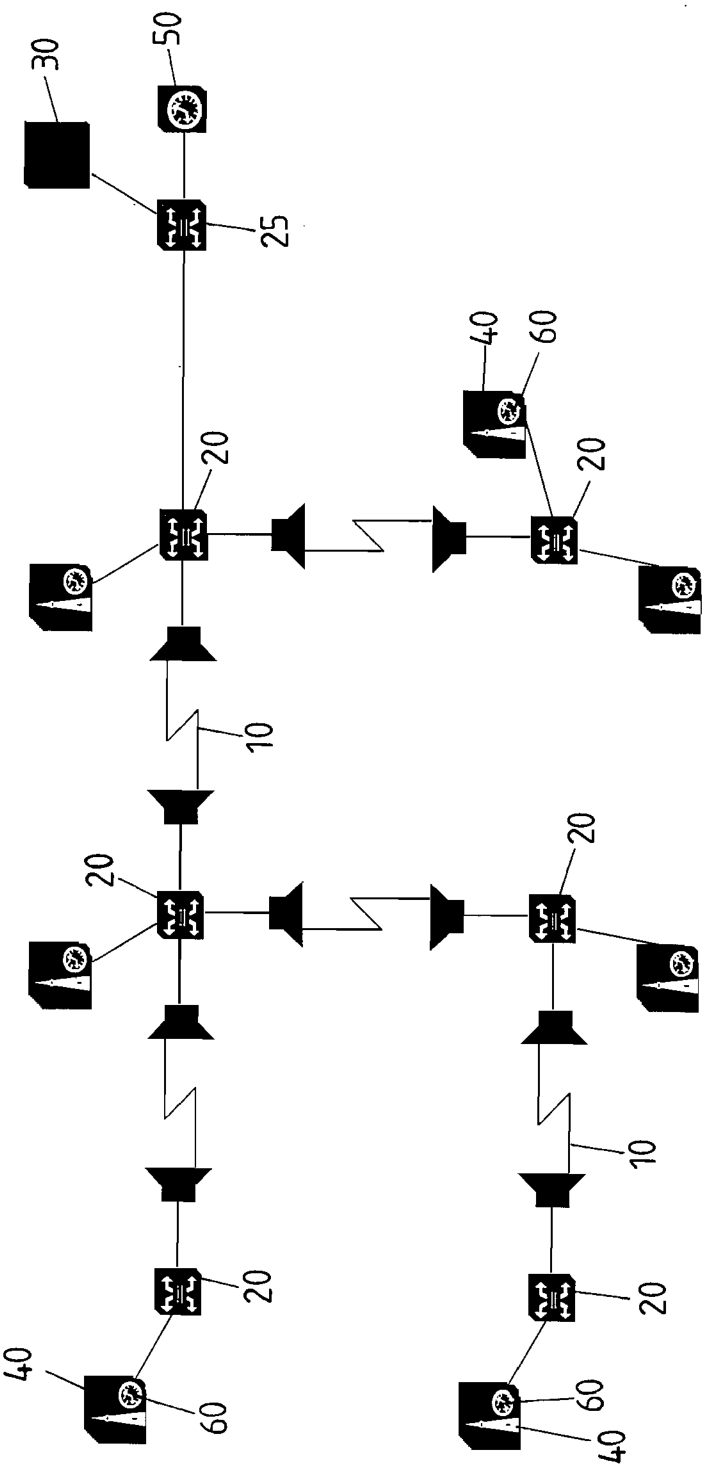


FIG 3

FIG 4

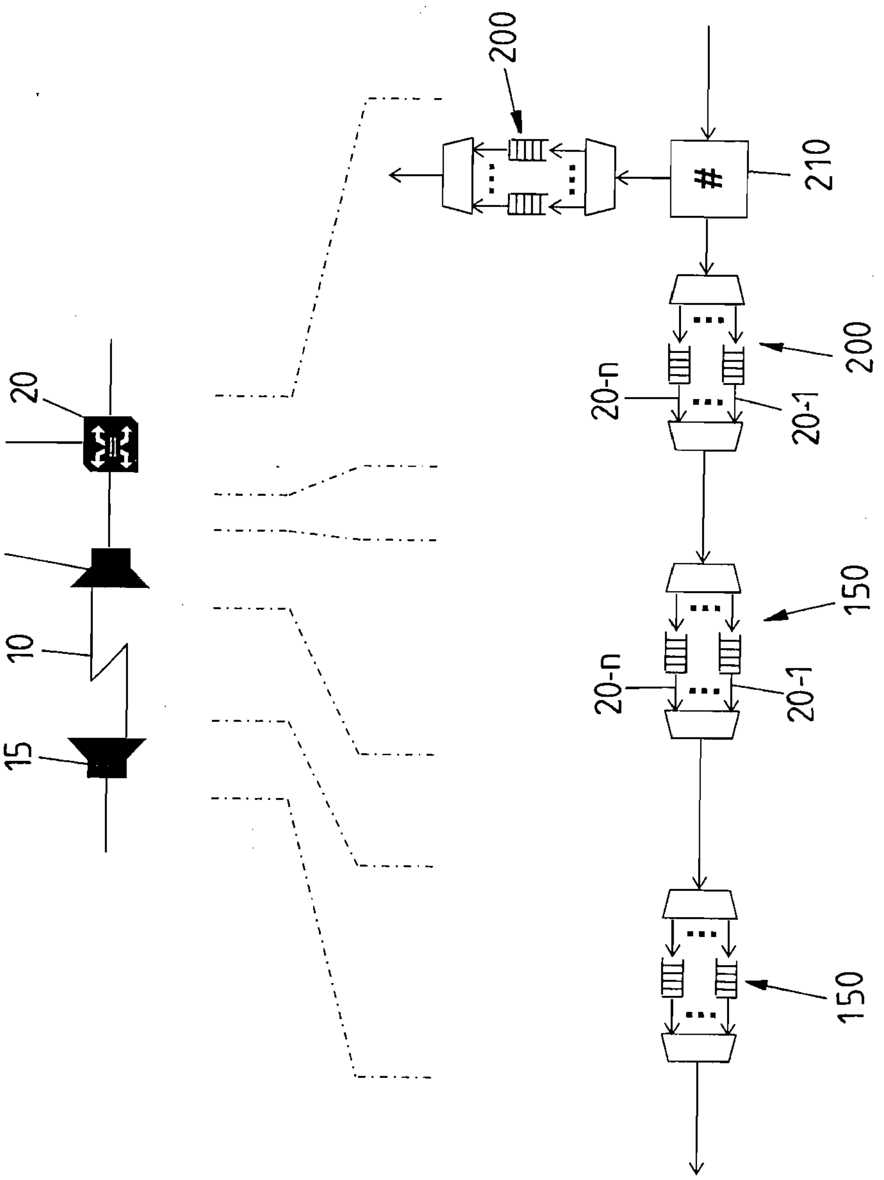

FIG 5

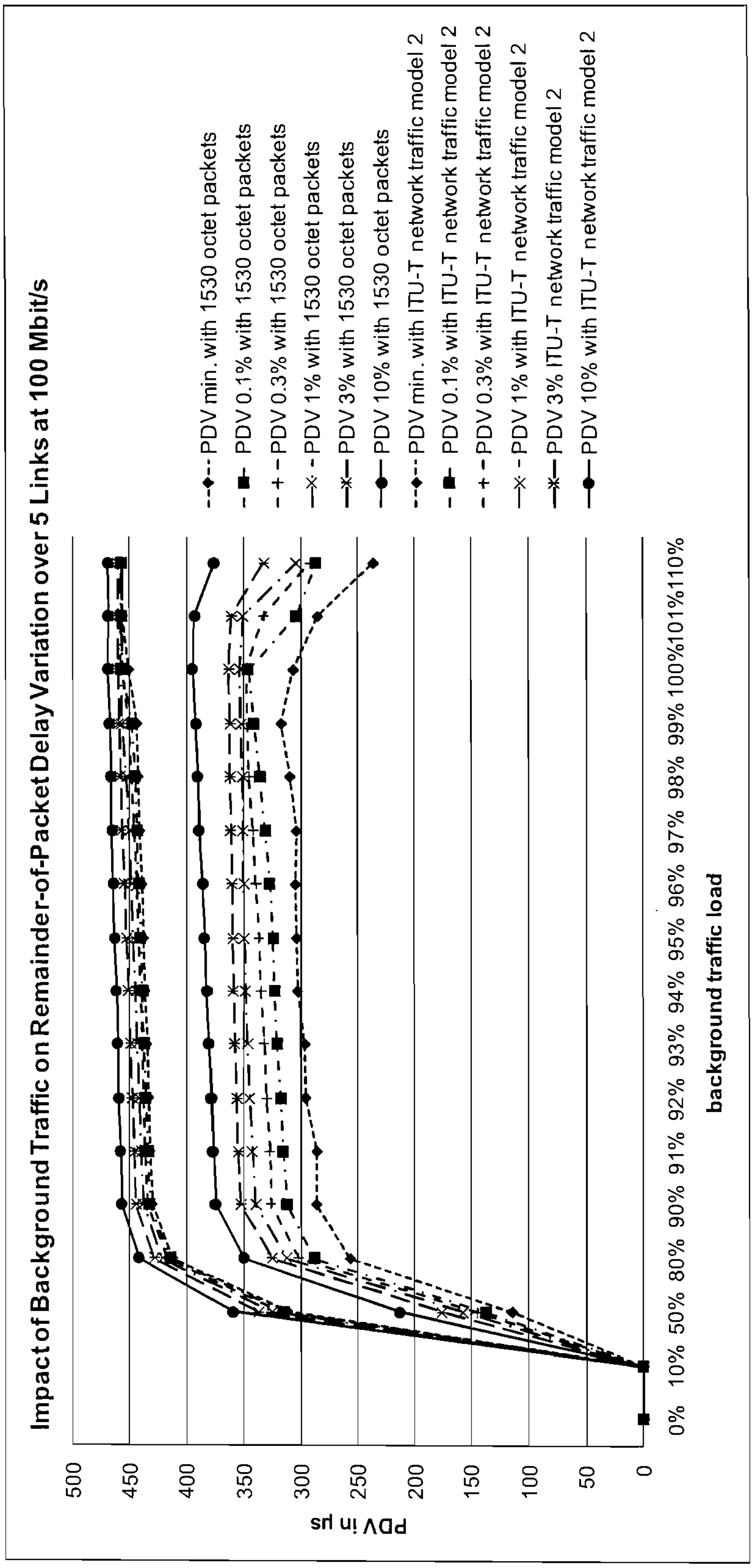
Impact of Background Traffic on Remainder-of-Packet Delay Variation over 5 Links at 100 Mbit/s
PDV in µs
500
450
400
350
300
250
200
150
100
50
0
0% 10% 50% 80% 90% 91% 92% 93% 94% 95% 96% 97% 98% 99% 100% 101% 110%
background traffic load
PDV min. with 1530 octet packets
PDV 0.1% with 1530 octet packets
PDV 0.3% with 1530 octet packets
PDV 1% with 1530 octet packets
PDV 3% with 1530 octet packets
PDV 10% with 1530 octet packets
PDV min. with ITU-T network traffic model 2
PDV 0.1% with ITU-T network traffic model 2
PDV 0.3% with ITU-T network traffic model 2
PDV 1% with ITU-T network traffic model 2
PDV 3% ITU-T network traffic model 2
PDV 10% with ITU-T network traffic model 2

FIG 6

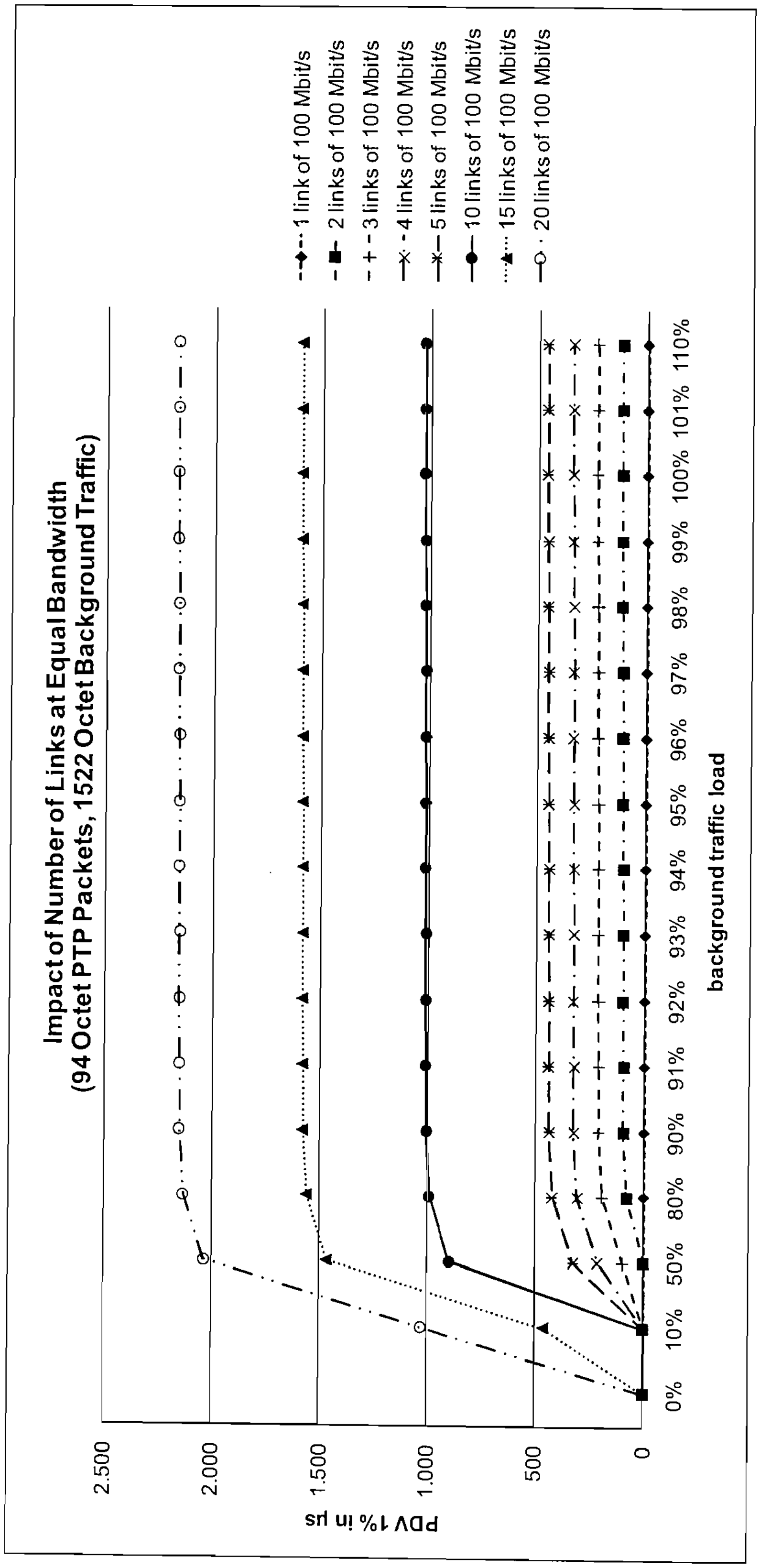
Impact of Number of Links at Equal Bandwidth
(94 Octet PTP Packets, 1522 Octet Background Traffic)
PDV 1% in µs
0
500
1.000
1.500
2.000
2.500
0%
10%
50%
80%
90%
91%
92%
93%
94%
95%
96%
97%
98%
99%
100%
101%
110%
background traffic load
1 link of 100 Mbit/s
2 links of 100 Mbit/s
3 links of 100 Mbit/s
4 links of 100 Mbit/s
5 links of 100 Mbit/s
10 links of 100 Mbit/s
15 links of 100 Mbit/s
20 links of 100 Mbit/s

FIG 7

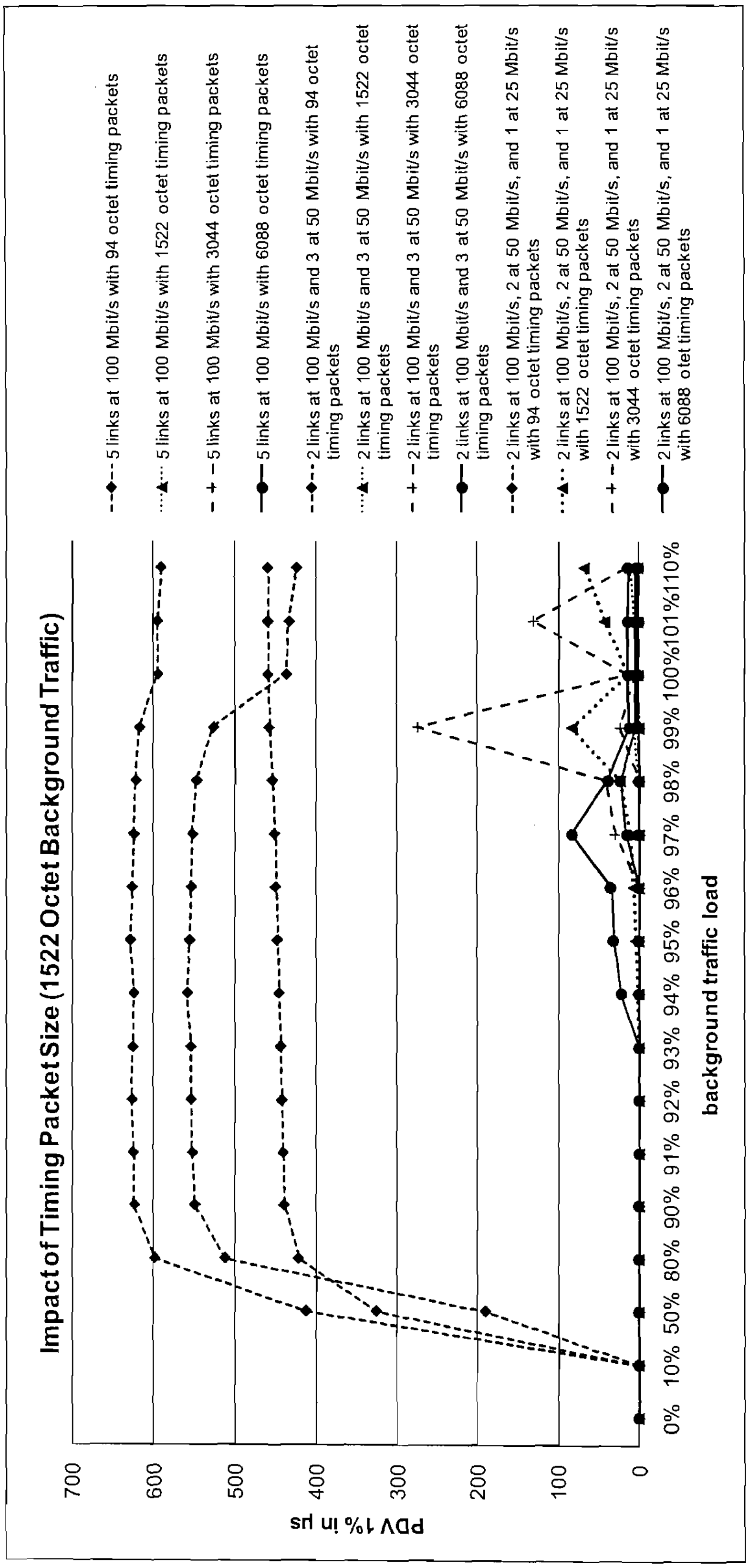
Impact of Timing Packet Size (1522 Octet Background Traffic)
PDV 1% in µs
0
100
200
300
400
500
600
700
0% 10% 50% 80% 90% 91% 92% 93% 94% 95% 96% 97% 98% 99% 100% 101% 110%
background traffic load
5 links at 100 Mbit/s with 94 octet timing packets
5 links at 100 Mbit/s with 1522 octet timing packets
5 links at 100 Mbit/s with 3044 octet timing packets
5 links at 100 Mbit/s with 6088 octet timing packets
2 links at 100 Mbit/s and 3 at 50 Mbit/s with 94 octet timing packets
2 links at 100 Mbit/s and 3 at 50 Mbit/s with 1522 octet timing packets
2 links at 100 Mbit/s and 3 at 50 Mbit/s with 3044 octet timing packets
2 links at 100 Mbit/s and 3 at 50 Mbit/s with 6088 octet timing packets
2 links at 100 Mbit/s, 2 at 50 Mbit/s, and 1 at 25 Mbit/s with 94 octet timing packets
2 links at 100 Mbit/s, 2 at 50 Mbit/s, and 1 at 25 Mbit/s with 1522 octet timing packets
2 links at 100 Mbit/s, 2 at 50 Mbit/s, and 1 at 25 Mbit/s with 3044 octet timing packets
2 links at 100 Mbit/s, 2 at 50 Mbit/s, and 1 at 25 Mbit/s with 6088 otet timing packets

FIG 8

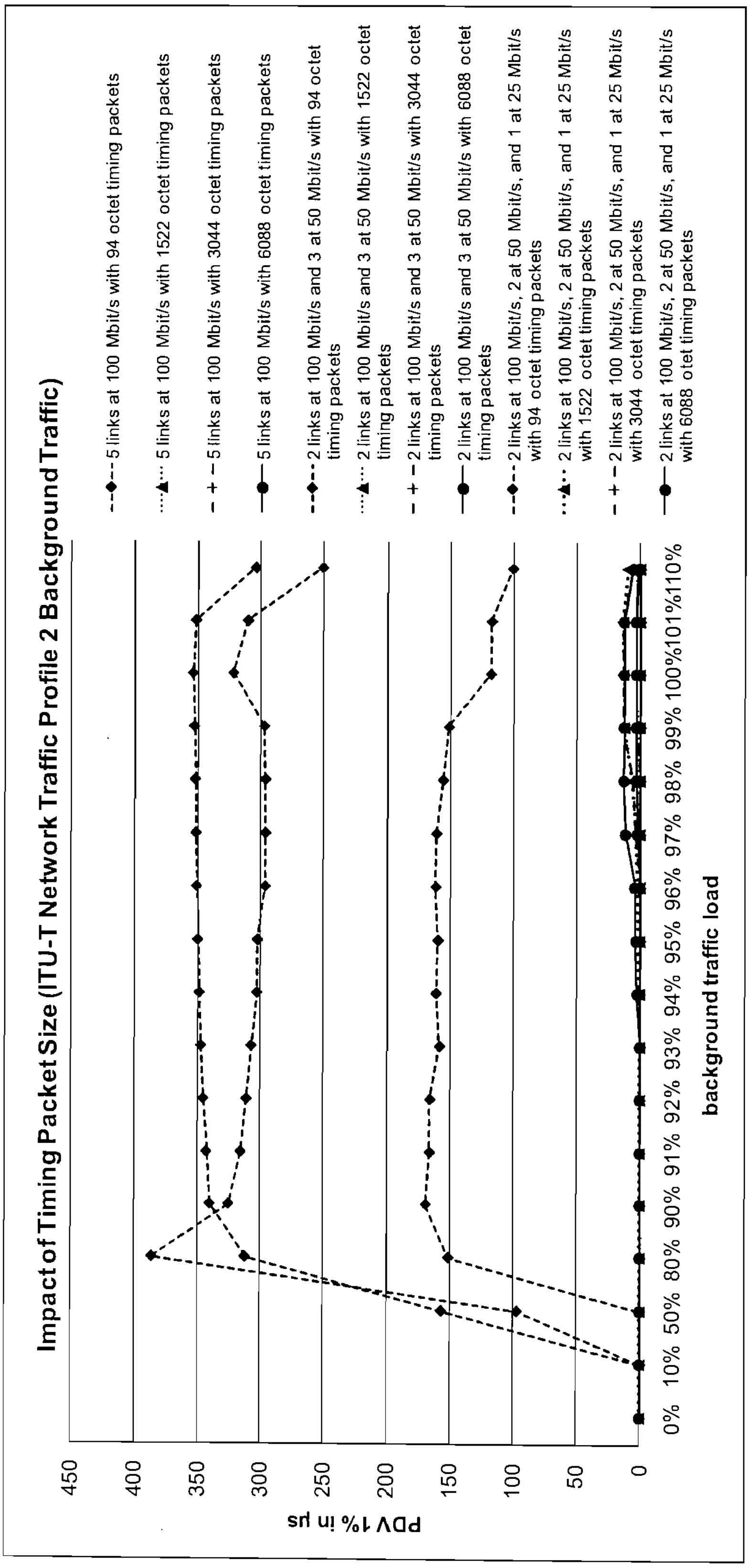
Impact of Timing Packet Size (ITU-T Network Traffic Profile 2 Background Traffic)
PDV 1% in µs
450
400
350
300
250
200
150
100
50
0
0% 10% 50% 80% 90% 91% 92% 93% 94% 95% 96% 97% 98% 99% 100% 101% 110%
background traffic load
5 links at 100 Mbit/s with 94 octet timing packets
5 links at 100 Mbit/s with 1522 octet timing packets
5 links at 100 Mbit/s with 3044 octet timing packets
5 links at 100 Mbit/s with 6088 octet timing packets
2 links at 100 Mbit/s and 3 at 50 Mbit/s with 94 octet timing packets
2 links at 100 Mbit/s and 3 at 50 Mbit/s with 1522 octet timing packets
2 links at 100 Mbit/s and 3 at 50 Mbit/s with 3044 octet timing packets
2 links at 100 Mbit/s and 3 at 50 Mbit/s with 6088 octet timing packets
2 links at 100 Mbit/s, 2 at 50 Mbit/s, and 1 at 25 Mbit/s with 94 octet timing packets
2 links at 100 Mbit/s, 2 at 50 Mbit/s, and 1 at 25 Mbit/s with 1522 octet timing packets
2 links at 100 Mbit/s, 2 at 50 Mbit/s, and 1 at 25 Mbit/s with 3044 octet timing packets
2 links at 100 Mbit/s, 2 at 50 Mbit/s, and 1 at 25 Mbit/s with 6088 otet timing packets

FIG 9A

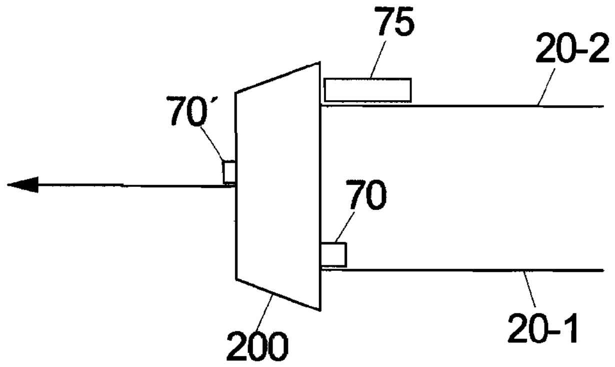


FIG 9B

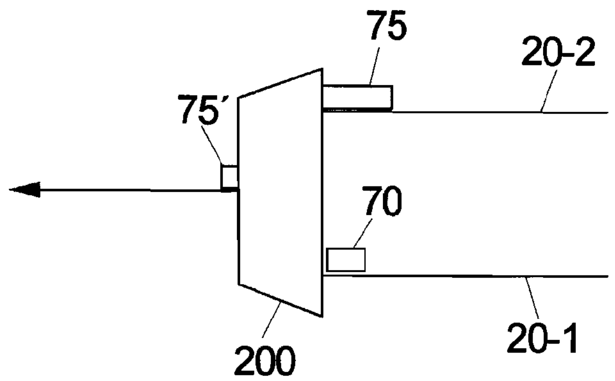


FIG 9C

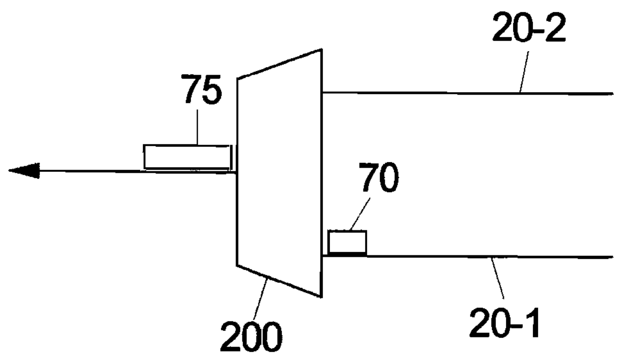

Europäisches Patentamt
European Patent Office
Office européen des brevets

# EUROPEAN SEARCH REPORT

Application Number
EP 10 17 5780

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BRENT MOCHIZUKI ET AL: "Improving IEEE 1588v2 clock performance through controlled packet departures", IEEE COMMUNICATIONS LETTERS, IEEE SERVICE CENTER, PISCATAWAY, NJ, US, vol. 14, no. 5, 1 May 2010 (2010-05-01), pages 459-461, XP011308300, ISSN: 1089-7798 * the whole document * ----- | 1-15 | INV. H04J3/06 |
| A | ILIJA HADZIC ET AL: "On packet selection criteria for clock recovery", PRECISION CLOCK SYNCHRONIZATION FOR MEASUREMENT, CONTROL AND COMMUNICATION, 2009. ISPCS 2009. INTERNATIONAL SYMPOSIUM ON, IEEE, PISCATAWAY, NJ, USA, 12 October 2009 (2009-10-12), pages 1-6, XP031570875, ISBN: 978-1-4244-4391-8 * the whole document * ----- | 1-15 | |
| A | DINH THAI BUI ET AL: "Packet delay variation management for a better IEEE1588V2 performance", PRECISION CLOCK SYNCHRONIZATION FOR MEASUREMENT, CONTROL AND COMMUNICATION, 2009. ISPCS 2009. INTERNATIONAL SYMPOSIUM ON, IEEE, PISCATAWAY, NJ, USA, 12 October 2009 (2009-10-12), pages 1-6, XP031570876, ISBN: 978-1-4244-4391-8 * the whole document * ----- | 1-15 | TECHNICAL FIELDS SEARCHED (IPC)<br>H04J<br>H04L |

The present search report has been drawn up for all claims

| Place of search | Date of completion of the search | Examiner |
|---|---|---|
| The Hague | 3 February 2011 | Marongiu, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)